# EUROPÄISCHE PATENTANMELDUNG

(11) **EP 2 824 824 A1**
(43) Veröffentlichungstag der Anmeldung: **14.01.2015**
(21) Anmeldenummer: 14174959.8
(22) Anmeldetag: 30.06.2014
(51) Int. Cl.: H02N 2/00, H02N 2/02

(54) **Antriebsvorrichtung**

(30) Priorität: 08.07.2013 DE 102013107154
(71) Anmelder: Physik Instrumente (PI) GmbH & Co. KG, 76228 Karlsruhe (DE)
(72) Erfinder: Wischnewskiy, Wladimir, 14712 Rathenow (DE); Wischnewski, Alexej, 76744 Wörth (DE)

(57) **Zusammenfassung**

Die Erfindung betrifft eine Antriebsvorrichtung umfassend eine Antriebseinheit (1) mit einer Vielzahl von nebeneinander angeordneten und voneinander beabstandeten Aktoren (13), wobei zumindest an einem Teil der Aktoren wenigstens ein Friktionselement (16) angebracht ist, ein mit den Friktionselementen in Friktionskontakt stehendes anzutreibendes Element (2) und eine elektrische Erregervorrichtung (3), wobei jeder der Aktoren (13) jeweils durch einen stabförmigen Resonator (14) gebildet ist, der an einer einzigen seiner flächenmäßig größeren Seitenflächen wenigstens einen mit der elektrischen Erregervorrichtung verbundenen Generator (18,19) zur Erzeugung akustischer Biegestehwellen in zwei senkrecht zueinander angeordneten Richtungen in diesem aufweist, wobei die Überlagerung der beiden akustischen Biegestehwellen zu einer Deformationsbewegung des Resonators führt, und diese Deformationsbewegung zum Antrieb des anzutreibenden Elements nutzbar ist.

## Beschreibung

Die Erfindung betrifft eine Antriebsvorrichtung gemäß den Ansprüchen 1 bis 6.

Aus der US 4,763,776 ist eine Antriebsvorrichtung bekannt, bei dem das anzutreibende Element mit einer Vielzahl nebeneinander angeordneter stabförmiger Resonatoren in Kontakt steht, wobei an den Resonatoren Generatoren für akustische Biegestehwellen angeordnet sind. Die Generatoren erzeugen hierbei akustische Biegestehwellen in den zwei senkrecht zur Erstreckungsrichtung der stabförmigen Resonatoren verlaufenden Richtungen (x- und y-Richtung), wobei durch deren Überlagerung die Resonatoren eine gleichsinnige Rotationsbewegung vollführen, die zum Antrieb des anzutreibende Elements genutzt werden kann.

Nachteilig bei der aus dem Stand der Technik bekannten Antriebsvorrichtung ist die Notwendigkeit des Vorsehens zumindest eines Generators für die Biegestehwelle in x-Richtung und zumindest eines Generators für die Biegestehwelle in y-Richtung, wobei die Generatoren an entsprechenden, unterschiedlichen Seitenflächen der Resonatoren anzubringen sind.

Dadurch erhöht sich der Aufwand zur Herstellung eines entsprechenden Antriebs erheblich. Denn nicht nur die Anbringung einer hohen Anzahl an Generatoren allein benötigt bereits viele zeitaufwändige Montageschritte; hinzu kommt, dass für den effektiven Betrieb der Antriebsvorrichtung Verbindungen zwischen den Generatoren und den entsprechenden Resonatoren notwendig sind, deren mechanische bzw. physikalische Eigenschaften nahezu gleichbleibend sind. Bei einer hohen Anzahl von an den Resonatoren anzubringenden Generatoren ist es dabei wesentlich aufwendiger, eine stets in etwa gleichbleibende Qualität der Verbindung - in der Regel durch eine Verklebung - zu realisieren. Abweichungen in der Qualität der Verklebung führen zu Streuungen der Resonanzfrequenz der Resonatoren und dadurch zu einer Antriebsvorrichtung mit verringerter Effektivität.

Aufgabe der vorliegenden Erfindung ist es daher, eine Antriebsvorrichtung bereitzustellen, bei welcher die Herstellung vergleichsweise einfach zu bewerkstelligen ist und der dadurch einfacher und kostengünstiger herstellbar ist.

Die Lösung dieser Aufgabe erfolgt durch eine Antriebsvorrichtung gemäß Patentanspruch 1, wobei die daran anschließenden Unteransprüche 2 bis 8 mindestens zweckmäßige Ausgestaltungen und Weiterbildungen umfassen.

Es wird demnach von einer Antriebsvorrichtung mit einer Antriebseinheit ausgegangen, die eine Vielzahl von nebeneinander angeordneten und voneinander beabstandeten Aktoren aufweist, wobei zumindest an einem Teil der Aktoren - d.h. nicht notwendigerweise an allen Aktoren - wenigstens ein Friktionselement angebracht ist, und die Antriebsvorrichtung weiterhin ein mit den Friktionselementen in Friktionskontakt stehendes anzutreibendes Element und eine elektrische Erregervorrichtung umfasst, wobei jeder der Aktoren jeweils durch einen stabförmigen Resonator gebildet ist, der mit einem seiner beiden distalen Endabschnitte oder mit beiden distalen Endabschnitten mit einem Trägerelement verbunden ist. An einer einzigen seiner flächenmäßig größeren freien Seitenflächen weist der Resonator wenigstens einen mit der elektrischen Erregervorrichtung verbundenen Generator zur Erzeugung akustischer Biegestehwellen in zwei senkrecht zueinander angeordneten Richtungen in diesem auf, wobei die Überlagerung der beiden akustischen Biegestehwellen zu einer Deformationsbewegung des Resonators führt, und diese Deformationsbewegung zum Antrieb des anzutreibenden Elements in einer zur Längsausrichtung der Aktoren bzw. der Resonatoren senkrechten Richtung nutzbar ist. ,Freie Seitenfläche' des Resonators bedeutet sowohl in diesem Zusammenhang, als auch im Sinne der vorliegenden Erfindung eine Seitenfläche, an der kein weiteres Element direkt oder indirekt angeordnet ist, so dass der Resonator an dieser Seitenfläche in entsprechender Weise nicht in einer durch den Generator erzeugten Deformation behindert wird.

Dadurch, dass jeweils nur wenigstens ein Generator an einer einzigen der größeren freien Seitenflächen des Resonators angeordnet ist, kann die Herstellung der Antriebsvorrichtung deutlich erleichtert werden. Insbesondere kann hierbei die Anbringung der Generatoren an den entsprechenden freien Seitenflächen der Resonatoren von einer Seite her erfolgen. Dies erlaubt beispielsweise ein sehr einfaches Anbringen der Generatoren bei bereits an einer Trägerstruktur montierten Resonatoren, und insbesondere dann, wenn die nebeneinander angeordneten Resonatoren nur einen sehr geringen gegenseitigen Abstand aufweisen.

Eine weitere Erleichterung hinsichtlich der Montage bzw. Herstellung der Antriebsvorrichtung ergibt sich dadurch, dass die Anzahl der elektrischen Verbindungen zwischen den Generatoren und der elektrischen Erregervorrichtung reduziert ist, bzw. dadurch, dass die elektrische Kontaktierung nur von einer Seite her zu realisieren ist.

Es kann von Vorteil sein, dass jeder der Resonatoren mit einem seiner beiden distalen Endabschnitte oder mit beiden distalen Endabschnitten mit einem Trägerelement verbunden ist.

Hierbei kann es insbesondere von Vorteil sein, dass die Resonatoren einstückig mit dem Trägerelement ausgeführt sind.

Weiterhin kann es von Vorteil sein, dass wenigstens einer der Aktoren einen Geber für die Amplitude der Biegedeformation aufweist.

Zudem kann es von Vorteil sein, dass die elektrische Erregervorrichtung einen Rückkopplungskreis zur Regelung der Frequenz der Erregerspannung in Bezug zur Phase des Gebers für die Amplitude der Biegedeformation aufweist.

Ferner kann es von Vorteil sein, dass der Querschnitt senkrecht zur Längsrichtung des Resonators in x-Richtung eine Ausdehnung tₓ und in zur x-Richtung senkrechten z-Richtung eine Ausdehnung t_{z} hat, wobei für das Verhältnis t_{X}/t_{Z} 0,8<t_{X}/t_{Z}≤1 gilt.

Hierbei kann es von Vorteil sein, dass der Generator als piezoelektrische Platte mit einer Dicke tp ausgeführt ist, wobei tp 5 bis 10 mal kleiner als tₓ oder t_{z} ist.

Weitere vorteilhafte Weiterbildungen der Antriebsvorrichtung ergeben sich durch Kombinationen der in den Ansprüchen, in der Beschreibung und in den Zeichnungen offenbarten Merkmale.

Kurze Beschreibung der Zeichnungen
Fig. 1: Eine Ausführungsform einer erfindungsgemäßen Antriebsvorrichtung
Fig. 2: Eine weitere Ausführungsform einer erfindungsgemäßen Antriebsvorrichtung
Fig. 3: Darstellung 6: Oberseite der Antriebseinheit der Antriebsvorrichtung gemäß Fig. 1; Darstellung 7: Unterseite der Antriebseinheit der Antriebsvorrichtung gemäß Fig. 1
Fig. 4: Darstellung 9: Oberseite der Antriebseinheit der Antriebsvorrichtung gemäß Fig. 2; Darstellung 10: Unterseite der Antriebseinheit der Antriebsvorrichtung gemäß Fig. 2
Fig. 5: Darstellung 28: Teilabschnitt eines Aktors einer Antriebseinheit gemäß Fig. 3; Darstellung 33: Ausführungsform eines Generators des Aktors gemäß Darstellung 28 und die entsprechende elektrische Verbindung desselben mit einer Erregervorrichtung; Darstellungen 34 und 35: Veranschaulichung der maximalen Deformationen des Aktors gemäß Darstellung 28 bei Erzeugung einer akustischen Biegestehwelle der Wellenlänge λ/2
Fig. 6 (nicht Teil der Erfindung): Darstellungen 36 und 37: eine Ausführungsform eines Aktors einer Antriebseinheit gemäß Fig. 3 in unterschiedlichen Sichten; Darstellungen 38 und 39: eine weitere Ausführungsform eines Aktors einer Antriebseinheit gemäß Fig. 3 in unterschiedlichen Sichten; Darstellung 40: Blockschaltbild betreffend die elektrische Verbindung des Aktors gemäß den Darstellungen 38 und 39
Fig. 7: Darstellung 42: Ausführungsform eines Aktors einer Antriebseinheit gemäß Fig. 3; Darstellung 43: Querschnitt des Aktors gemäß Darstellung 42; Darstellung 44: Verschiedene Bewegungsbahnen von ausgewählten Punkten des Querschnitts des Aktors gemäß Darstellung 42
Fig. 8: Darstellung 46: Teilabschnitt eines Aktors einer Antriebseinheit gemäß Fig. 4; Darstellung 47: Ausführungsform eines Generators des Aktors gemäß Darstellung 46 und die entsprechende elektrische Verbindung desselben mit einer Erregervorrichtung; Darstellungen 48 und 49: Veranschaulichung der maximalen Deformationen des Aktors gemäß Darstellung 46 bei Erzeugung einer akustischen Biegestehwelle der Wellenlänge λ/4
Fig. 9 (nicht Teil der Erfindung): Darstellungen 50 und 51: eine Ausführungsform eines Aktors einer Antriebseinheit gemäß Fig. 4 in unterschiedlichen Sichten; Darstellungen 52 und 53: eine weitere Ausführungsform eines Aktors einer Antriebseinheit gemäß Fig. 4 in unterschiedlichen Sichten; Darstellungen 54 und 55: eine weitere Ausführungsform eines Aktors einer Antriebseinheit gemäß Fig. 4 in unterschiedlichen Sichten; Darstellung 56: Blockschaltbild betreffend die elektrische Verbindung des Aktors gemäß den Darstellungen 54 und 55
Fig. 10: Darstellung 57: Ausführungsform eines Aktors einer Antriebseinheit gemäß Fig. 4; Darstellung 58: Querschnitt des Aktors gemäß Darstellung 57; Darstellung 59: Verschiedene Bewegungsbahnen von ausgewählten Punkten des Querschnitts des Aktors gemäß Darstellung 58
Fig. 11: Darstellung 60: weitere Ausführungsform eines Generators eines Aktors einer Antriebseinheit gemäß Fig. 3 und die entsprechende elektrische Verbindung desselben mit einer Erregervorrichtung; Darstellungen 61 und 62: Veranschaulichung der maximalen Deformationen des Aktors gemäß Darstellung 60 bei Erzeugung einer akustischen Biegestehwelle
Fig. 12: Darstellung 67: weitere Ausführungsform eines Generators eines Aktors einer Antriebseinheit gemäß Fig. 3 und die entsprechende elektrische Verbindung desselben mit einer Erregervorrichtung; Darstellungen 68 und 69: Veranschaulichung der maximalen Deformationen des Aktors gemäß Darstellung 67 bei Erzeugung einer akustischen Biegestehwelle
Fig. 13: Darstellung 70: weitere Ausführungsform eines Aktors einer Antriebseinheit gemäß Fig. 3; Darstellung 71: weitere Ausführungsform eines Aktors einer Antriebseinheit gemäß Fig. 4
Fig. 14: Darstellung 72: weitere Ausführungsform eines Generators eines Aktors einer Antriebseinheit; Darstellung 73: Blockschaltbild betreffend die elektrische Verbindung des Generators gemäß Darstellung 72 mit einer Erregervorrichtung
Fig. 15: Darstellung 74: weitere Ausführungsform eines Generators eines Aktors einer Antriebseinheit; Darstellung 75: Blockschaltbild betreffend die elektrische Verbindung des Generators gemäß Darstellung 74 mit einer Erregervorrichtung
Fig. 16: Darstellung 76: weitere Ausführungsform eines Generators eines Aktors einer Antriebseinheit; Darstellung 77: Blockschaltbild betreffend die elektrische Verbindung des Generators gemäß Darstellung 76 mit einer Erregervorrichtung
Fig. 17: Darstellung 80: weitere Ausführungsform eines Generators eines Aktors einer Antriebseinheit; Darstellung 81: Ausführungsform eines Aktors einer Antriebseinheit gemäß Fig. 3 mit einem Generator gemäß Darstellung 80; Darstellung 82: Ausführungsform eines Aktors einer Antriebseinheit gemäß Fig. 4 mit einem Generator gemäß Darstellung 80
Fig. 18: Darstellungen 86: Blockschaltbild betreffend die elektrische Verbindung von zwei Generatoren eines Aktors einer Antriebseinheit bei einphasiger Ansteuerung des Aktors; Darstellung 88: Querschnitt eines Aktors gemäß Darstellung 86; Darstellung 89: unterschiedliche Bewegungsbahnen einzelner Punkte des Aktors gemäß Darstellung 88
Fig. 19: Darstellung 90: Veranschaulichung des Aufbaus eines Generators gemäß Darstellung 80 von Fig. 17 in Draufsicht; Darstellungen 91 und 92: zwei unterschiedliche Ausführungsformen eines Piezoelements des Generators gemäß Darstellung 90; Darstellung 93: Veranschaulichung des Aufbaus eines Generators gemäß Darstellung 80 von Fig. 7 in Seitenansicht; Darstellung 94: Blockschaltbild betreffend die elektrische Verbindung der Piezoelemente des Generators untereinander bzw. mit einer Erregervorrichtung
Fig. 20: Darstellung 99: Oberseite einer weiteren Ausführungsform einer Antriebseinheit einer erfindungsgemäßen Antriebsvorrichtung; Darstellung 100: Unterseite der Antriebseinheit gemäß Darstellung 99; Darstellung 101: Antriebseinheit gemäß Darstellung 99 bzw. Darstellung 100 zusammen mit einem anzutreibenden Element
Fig. 21: Darstellung 102: Oberseite einer weiteren Ausführungsform einer Antriebseinheit einer erfindungsgemäßen Antriebsvorrichtung; Darstellung 103: Unterseite der Antriebseinheit gemäß Darstellung 102; Darstellung 104: Antriebseinheit gemäß Darstellung 102 bzw. Darstellung 103 zusammen mit einem anzutreibenden Element
Fig. 22: Weitere Ausführungsform einer erfindungsgemäßen Antriebsvorrichtung
Fig. 23: Schematische Darstellung einer möglichen Ausführungsform betreffend die elektrische Verbindung der Generatoren eines Aktors mit einer Erregervorrichtung
Fig. 24: Darstellungen 105-108: Berechnete maximale Deformationen der Aktoren einer Antriebseinheit bei einer elektrischen Verbindung der Generatoren gemäß Fig. 23
Fig. 25: Blockschaltbild betreffend eine mögliche Ausführungsform betreffend die elektrische Verbindung eines Aktors einer Antriebseinheit mit einer Erregervorrichtung

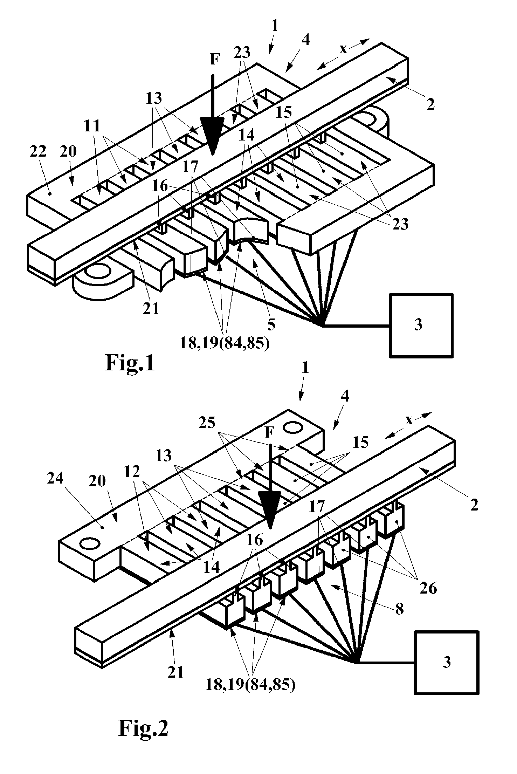

Fig. 1 zeigt eine erste Ausführungsform einer erfindungsgemäßen Antriebsvorrichtung, welche die Antriebseinheit 1, das anzutreibende Element 2 und die elektrische Erregervorrichtung 3 umfasst. Die Antriebseinheit 1 weist eine Vielzahl von stabförmigen Aktoren 13 auf, die nebeneinander und voneinander beabstandet in paralleler Ausrichtung angeordnet sind. Die Aktoren 13 sind jeweils gebildet durch einen stabförmigen Resonator 14 und einen an einer der freien Seitenflächen des Resonators angeordneten Generator 18, 19 zur Erzeugung akustischer Biegestehwellen in diesem. Jeder Resonator ist an seinen beiden in Längsrichtung betrachteten Endabschnitten (distale Endabschnitte) mit einem Trägerelement 20 in Form eines Rahmens 22 über eine Klebung verbunden, so dass jeder Resonator zweiseitig fest eingespannt bzw. verbunden ist. Neben einer Verklebung sind andere Arten der Verbindung denkbar, beispielsweise über eine Lötung. Weiterhin ist es möglich, dass die Resonatoren einstückig mit dem Trägerelement ausgebildet sind und dabei aus dem gleichen Material bzw. Werkstoff bestehen.

Als Werkstoffe für das Trägerelement 20 bzw. die Resonatoren 14 können Metalle, wie z. B. Stahl, Messing, Bronze, Aluminium oder Titan dienen. Es können auch verschiedene Arten von Keramik auf Basis von beispielsweise Al₂O₃, ZrO₂, Si₃N₄, SiC, Al₂TiO₅, WC oder TiC verwendet werden. Außerdem können verschiedene Typen hochtemperaturbeständiger Kunststoffe als Werkstoff für das Trägerelement und/oder die Resonatoren eingesetzt werden.

Jeder Generator ist an der gleichen freien Seitenfläche des jeweiligen Resonators angebracht. In Fig. 1 ist dies die nach unten weisende freie Seitenfläche des jeweiligen Resonators. An der jeweils gegenüberliegenden freien Seitenfläche, d.h. in Fig. 1 die nach oben weisende Seitenfläche, ist das Friktionselement 16 angeordnet. Mit den Friktionselementen 16 steht das anzutreibende Element 2 über dessen Friktionsoberfläche 21 in Kontakt, wobei das anzutreibende Element 2 mittels der Kraft F gegen die Friktionselemente 16 gedrückt ist. Die Bewegungsrichtung des anzutreibenden Elements ist in Fig. 1 mit Pfeilen und dem Index x gekennzeichnet. Hierbei ist die Bewegungsrichtung des anzutreibenden Elements senkrecht bzw. im Wesentlichen senkrecht zur Längsrichtung bzw. Längsausdehnungsrichtung der Aktoren. Der Begriff ,im Wesentlichen senkrecht' bedeutet hierbei eine geringfügige Abweichung von einem rechten oder 90°-Winkel zwischen der Bewegungsrichtung des anzutreibenden Elements und der Längsrichtung der Aktoren, und insbesondere eine Abweichung von weniger als 5% vom rechten Winkel. Die Generatoren sind jeweils elektrisch mit der Erregervorrichtung 3 verbunden.

Fig. 2 zeigt eine weitere Ausführungsform einer erfindungsgemäßen Antriebsvorrichtung, die sich von der Ausführungsform gemäß Fig. 1 hauptsächlich dadurch unterscheidet, dass die Resonatoren nur einseitig, d.h. an nur einem distalen Endabschnitt, fest mit dem Trägerelement 20 in Form eines Stabes oder einer Platte 24 verbunden sind, während an dem gegenüberliegenden distalen Endabschnitt eine freie Fläche, welche eine Stirnfläche 26 bildet, vorhanden ist. Da der Aufbau ansonsten gleich ist, wird auf eine weitergehende Beschreibung verzichtet.

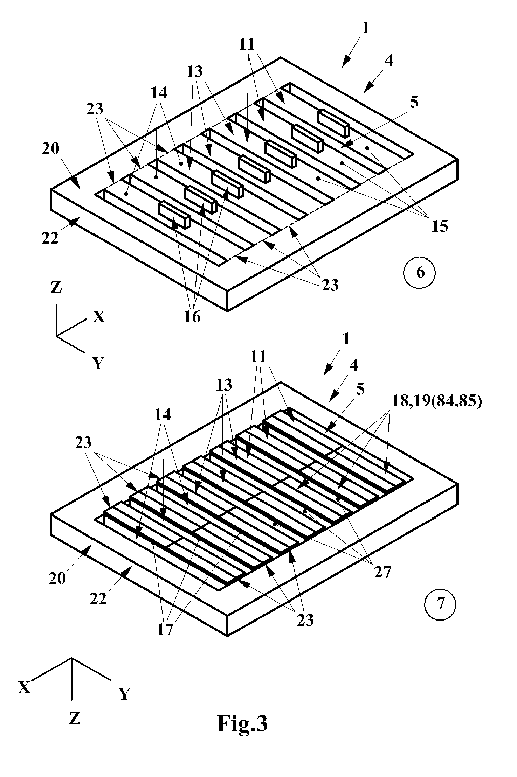

Fig. 3 zeigt in Darstellung 6 als Einzelheit von Fig. 1 die entsprechende Antriebseinheit 1 mit Blick auf die Seitenflächen 15 der Resonatoren 14, an denen jeweils ein Friktionselement 16 angeordnet ist. Hierbei ist jedes Friktionselement 16 im Wesentlichen in der Mitte zwischen den beiden distalen Endabschnitten des jeweiligen Resonators 14 angeordnet. Die Friktionselemente 16 sind stabförmig, und ihre Längsausrichtung fällt mit der Längsausrichtung der Resonatoren im Wesentlichen zusammen. Andere Formen der Friktionselemente wie beispielsweise eine Kugel-, Kegel- oder Zylinderform sind ebenso denkbar. Zudem ist denkbar, dass nur ein Teil der Resonatoren mit einem Friktionselement versehen ist, beispielsweise nur jeder zweite Resonator.

In Darstellung 7 von Fig. 3 ist die Antriebseinheit 1 aus Darstellung 6 von der entsprechend gegenüberliegenden Seite gezeigt. Auf den Seitenflächen 17 der Resonatoren 14 ist jeweils ein Generator 18, 19 für akustische Biegestehwellen angeordnet.

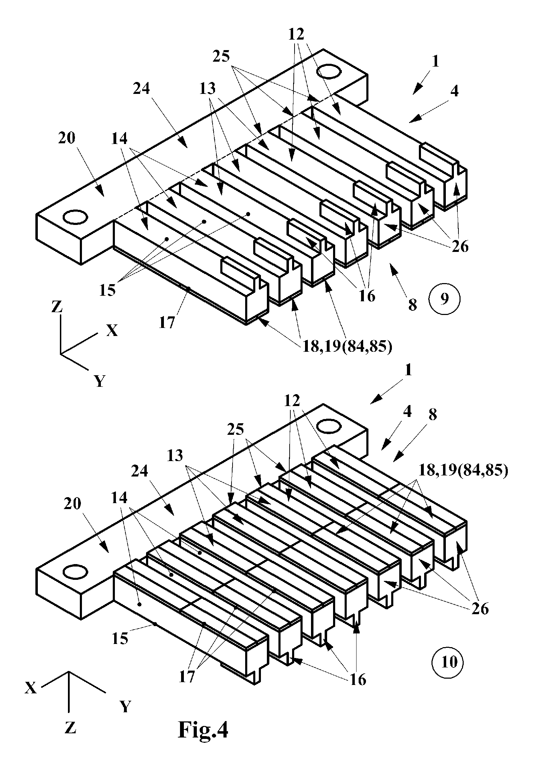

Fig. 4 zeigt in Darstellung 9 als Einzelheit von Fig. 2 die entsprechende Antriebseinheit 1 mit Blick auf die Seitenflächen 15 der Resonatoren 14, an denen jeweils ein Friktionselement 16 angeordnet ist. Hierbei ist jedes Friktionselement am frei beweglichen, distalen Ende des jeweiligen Resonators angeordnet.

In Darstellung 10 von Fig. 4 ist die Antriebseinheit 1 aus Darstellung 9 von der entsprechend gegenüberliegenden Seite gezeigt. Auf den Seitenflächen 17 der Resonatoren 14 ist jeweils ein Generator 18, 19 für akustische Biegestehwellen angeordnet.

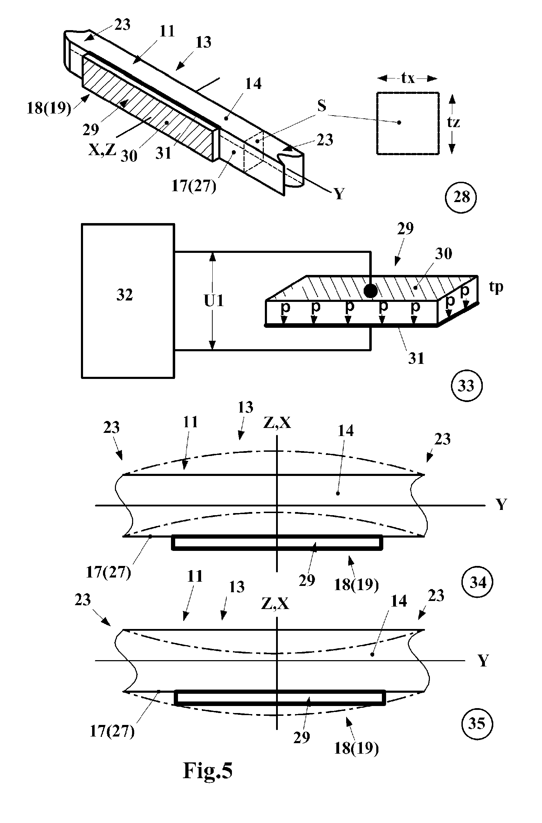

Darstellung 28 von Fig. 5 zeigt einen Teilabschnitt eines Aktors einer Antriebseinheit 1 gemäß Fig. 3. Der Querschnitt des Resonators 14 hat eine Abmessung bzw. Ausdehnung tₓ in x-Richtung und eine Abmessung bzw. Ausdehnung t_{z} in z-Richtung. Das Verhältnis tₓ/t_{z} ist größer 0,8 und kleiner oder gleich 1, also 0,8 < tₓ/t_{z} ≤ 1. An dem Resonator ist an der Seitenfläche 17 ein Generator 18, 19 zur Erzeugung einer akustischen Biegestehwelle in diesem angeordnet, wobei der Generator als piezoelektrische Platte 29 mit einer Dicke tp ausgeführt ist. Die Dicke tp kann 5 bis 10 mal kleiner als t_{z} oder tₓ sein.

Gemäß Darstellung 33 von Fig. 5 besitzt die piezoelektrische Platte eine Erregerelektrode 30 und eine allgemeine Elektrode 31, die mit dem Generator 32 zur Erzeugung einer elektrischen Erregerwechselspannung U₁ verbunden sind. Die Frequenz fg der Spannung U₁ wird gleich der Frequenz gewählt, bei der im Resonator 14 eine Biegestehwelle erzeugt wird, deren Länge gleich λ/2 ist.

In den Darstellungen 34 und 35 von Fig. 5 verdeutlicht die strichpunktierte Linie die zwei Phasen maximaler Deformation des Resonators 14 des Aktors gemäß Darstellung 28, wenn in ihm eine akustische Biegestehwelle der Wellenlänge λ/2 erzeugt wird. Bei dieser Biegestehwelle erfolgt eine Krümmung des Resonators 14 in Richtung der z-Achse (und in der zy-Ebene liegend), wobei im Folgenden auch von einer quer liegenden Biegestehwelle gesprochen wird, die eine Wellenlänge von λ_{q}/2 aufweist. Dabei bildet die piezoelektrische Platte 29 den Generator 18 für die Biegestehwelle.

Anders als in den Darstellungen 34 und 35 von Fig. 5 gezeigt, kann die piezoelektrische Platte 29 auch mit einer an die Seitenfläche 17 angrenzenden Seitenfläche des Resonators 14 verbunden sein. In diesem Fall wird im Resonator 14 eine im Folgenden als längs liegend bezeichnete Biegestehwelle erzeugt (Wellenlänge λₗ), bei der die Krümmung des Resonators 14 in Richtung der x-Achse (und in der xy-Ebene) erfolgt.

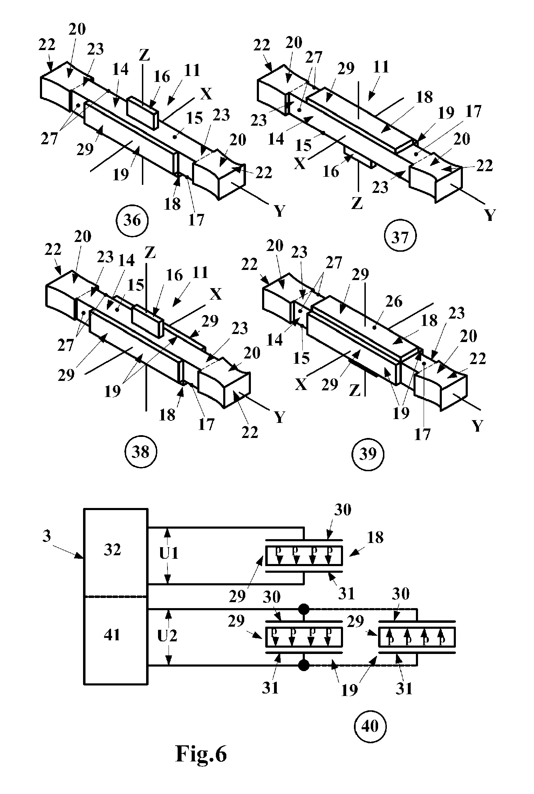

Die Darstellungen 36 bis 39 von Fig. 6 zeigen Ausführungsformen von Aktoren einer Antriebsvorrichtung gemäß Fig. 1, die jedoch nicht zur Erfindung gehörend sind. Während in den Darstellungen 36 und 37 an dem Resonator 14 an zwei seiner Seitenflächen jeweils ein Generator 18, 19 angeordnet ist, sind am dem Resonator gemäß den Darstellungen 38 und 39 an drei seiner Seitenflächen Generatoren 18, 19 angeordnet. Der Generator 18 umfasst hierbei eine piezoelektrische Platte 29, während der Generator 19 zwei gegenphasig angeschlossene piezoelektrische Platten 29 aufweist. Darstellung 40 von Fig. 6 zeigt in diesem Zusammenhang die Schaltung zum Verbinden der Generatoren 18 und 19 mit der elektrischen Erregervorrichtung 3. Die elektrische Erregervorrichtung besitzt zwei Generatoren für die elektrischen Spannungen 32 und 41. Der Generator 32 stellt hierbei die elektrische Wechselspannung U₁ bereit, während der Generator 41 die elektrische Wechselspannung U₂ bereitstellt. Die Frequenz fg der Spannungen U₁ und U₂ wird dabei so gewählt, dass sie untereinander gleich und gleich der Frequenz sind, bei der im Resonator 14 eine quer liegende Biegestehwelle und eine längs liegende Biegestehwelle erzeugt werden, deren Wellenlänge gleich λ_{q}/2 und λₗ/2 sind.

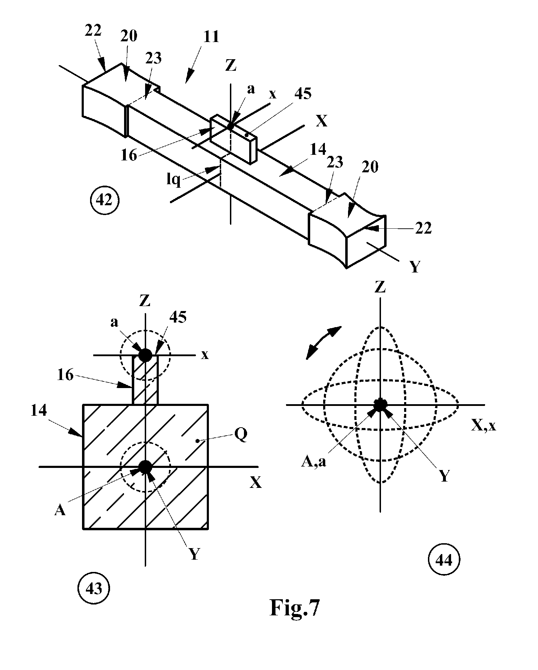

Darstellung 42 von Fig. 7 zeigt einen stabförmigen Resonator 14 einer Antriebsvorrichtung gemäß Fig. 1, während Darstellung 43 von Fig. 7 die Querschnittsgeometrie Q des Resonators zusammen mit dem an diesem angeordneten Friktionselement wiedergibt.

Beim Anlegen der elektrischen Spannungen U₁ und U₂ an die Elektroden 30 und 31 der piezoelektrischen Platten 29 der Generatoren 18 und 19 bewegen sich der im Zentrum des Querschnitts Q liegende Punkt A und die anderen Punkte des Querschnitts Q auf kreis- oder elliptischen Bewegungsbahnen, wie in den Darstellungen 43 bzw. 44 von Fig. 7 durch eine gestrichelte Linie verdeutlicht. Auf den gleichen Bewegungsbahnen bewegt sich der Punkt a und die anderen Punkte der Friktionsoberfläche 45 des Friktionselements 16. Die Form der Bewegungsbahn hängt dabei vom Verhältnis der Amplitude zu den Phasen der Spannungen U₁ und U₂ ab.

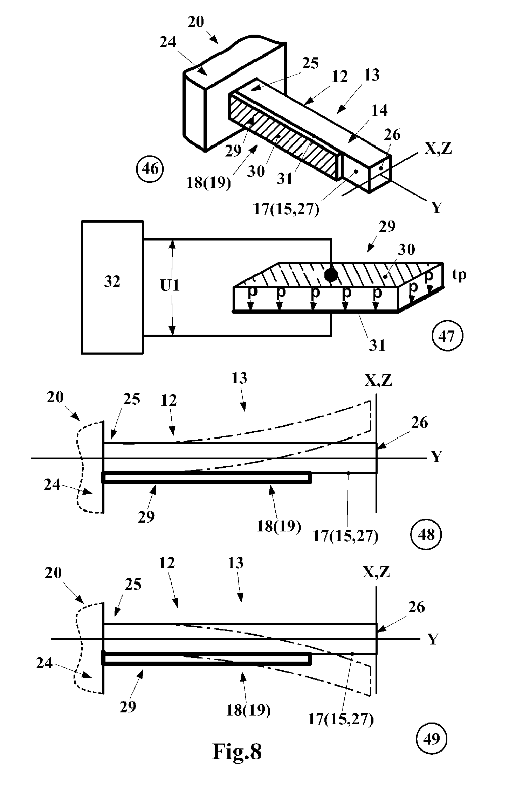

Darstellung 46 von Fig. 8 zeigt einen Teilabschnitt eines Aktors einer Antriebseinheit gemäß Fig. 4, wobei an der Seitenfläche 17 seines Resonators 14 ein Generator 18, 19 zur Erzeugung einer akustischen Biegestehwelle in diesem angeordnet ist, und der Generator als piezoelektrische Platte 29 mit einer Dicke tp ausgeführt ist.

Gemäß Darstellung 47 von Fig. 8 besitzt die piezoelektrische Platte eine Erregerelektrode 30 und eine allgemeine Elektrode 31, die mit dem Generator 32 zur Erzeugung einer elektrischen Erregerwechselspannung U₁ verbunden sind. Die Frequenz fg der Spannung U₁ wird gleich der Frequenz gewählt, bei der im Resonator 14 eine Biegestehwelle erzeugt wird, deren Länge gleich λ/4 ist. Die Phasen maximaler Deformation bei Erzeugung einer solchen Biegestehwelle in dem Resonator 14 sind in den Darstellungen 48 und 49 von Fig. 8 veranschaulicht.

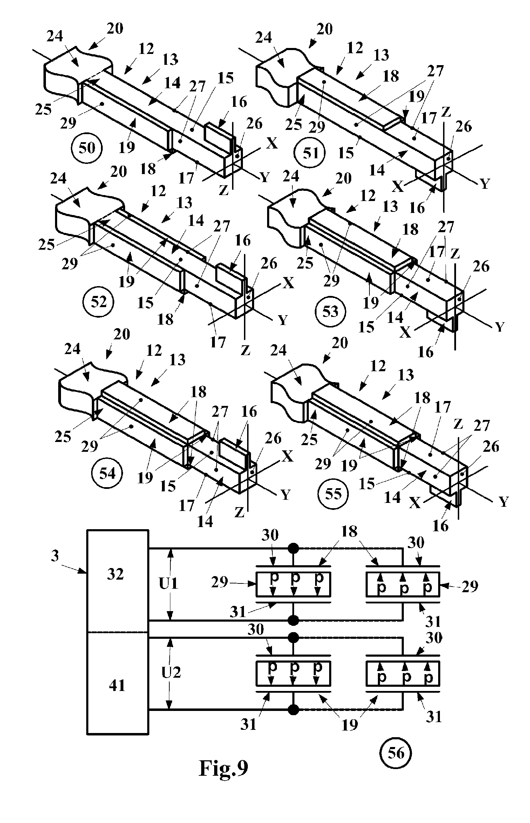

Die Darstellungen 50 bis 55 von Fig. 9 zeigen Ausführungsformen von Aktoren einer Antriebsvorrichtung gemäß Fig. 2, die jedoch nicht zur Erfindung gehörend sind. In den Darstellungen 50 und 51 sind an dem Resonator zwei Generatoren 18 und 19 an zwei aneinander angrenzenden Seitenflächen angeordnet, wobei der Generator 18 der Erzeugung einer quer liegenden Biegestehwelle und der Generator 19 der Erzeugung einer längs liegenden Biegestehwelle dient. Jeder der Generatoren 18 und 19 kann hierbei eine oder zwei piezoelektrische Platten 29 aufweisen.

Demgegenüber zeigen die Darstellungen 52 und 53 einen Resonator, bei welchem an drei seiner Seitenflächen Generatoren 18 und 19 angeordnet sind.

In den Darstellungen 54 und 55 ist schließlich ein Resonator gezeigt, der an allen seiner Seitenflächen einen Generator 18, 19 aufweist. Darstellung 56 von Fig. 9 zeigt hierfür die Schaltung zum Verbinden der Generatoren 18 und 19 mit der elektrischen Erregervorrichtung 3.

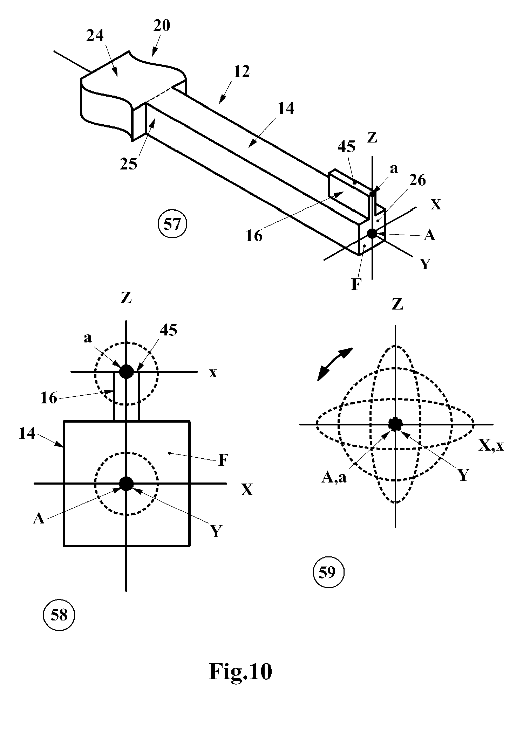

Darstellung 57 von Fig. 10 zeigt einen Resonator 14 eines Aktors 13 einer Antriebsvorrichtung gemäß Fig. 2. Der Resonator 14 weist auf seiner freien Stirnfläche 26 die Oberfläche F auf mit dem Punkt A in seinem Zentrum und dem Punkt a auf der Friktionsoberfläche 45 des Friktionselements 16. Darstellung 58 von Fig. 10 zeigt die diesbezügliche Querschnittsgeometrie.

Beim Anlegen der elektrischen Spannungen U₁ und U₂ an die Elektroden 30 und 31 der piezoelektrischen Platten 29 der Generatoren 18 und 19 bewegt sich der im Zentrum der Oberfläche F liegende Punkt A und die anderen Punkte der Oberfläche F auf kreisförmigen oder elliptischen Bewegungsbahnen, wie dies in den Darstellungen 58 und 59 von Fig. 10 durch die gestrichelte Linie verdeutlicht ist. Auf den gleichen Bewegungsbahnen bewegt sich der Punkt a und die anderen Punkte der Friktionsoberfläche 45 des Friktionselementes 16. Die Form der Bewegungsbahn hängt hierbei vom Verhältnis der Amplituden zu den Phasen der Spannungen U₁ und U₂ ab.

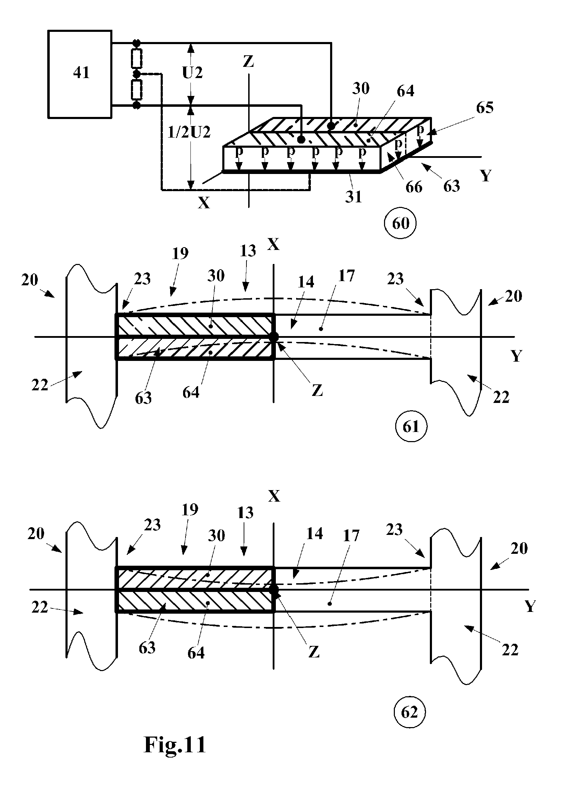

In Darstellung 60 von Fig. 11 ist eine weitere Ausführungsform eines Generators 19 für einen Aktor einer Antriebseinheit gezeigt, bestehend aus einer piezoelektrischen Platte 63 mit zwei symmetrisch zur yz-Ebene und symmetrisch zur allgemeinen Elektrode 31 angeordneten Erregerelektroden 30, 64. Die yz-Ebene teilt die piezoelektrische Platte 63 in die zwei gleichen Teile 65, 66, die zur Erregerspannung U₂ in Reihe und zueinander gegenphasig geschaltet sind. Bei dieser Variante kann die allgemeine Elektrode 31 frei bleiben oder mit der halben Spannung U₂ beaufschlagt werden.

Die Darstellungen 61 und 62 verdeutlichen die Phasen maximaler Deformation eines Aktors einer Antriebseinheit gemäß Fig. 3 mit einem Generator 19 gemäß Darstellung 60, welcher mit der Seitenfläche 17 des Resonators 14 verbunden ist.

Beim Anlegen der Erregerspannung U₂ an die Elektroden 30 und 64 biegt die piezoelektrische Platte 63 den Resonator 14 in Richtung der x-Achse (in xy-Ebene). Dadurch wird im Resonator 14 eine längs liegende akustische Biegestehwelle erzeugt.

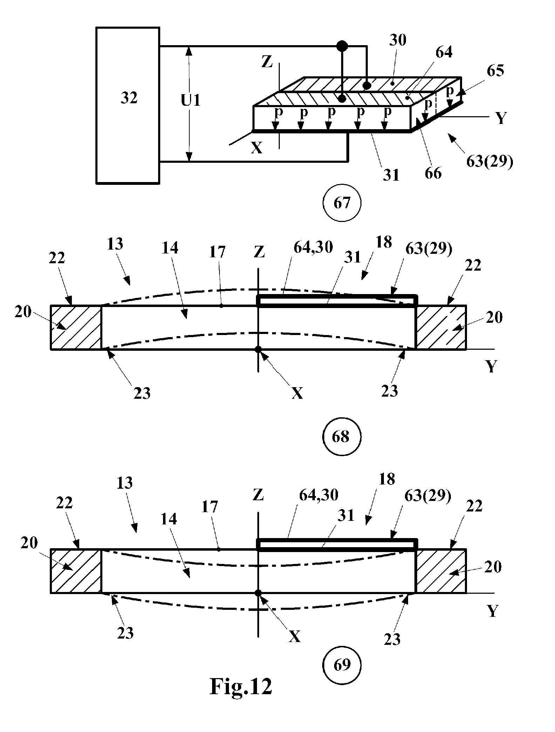

Darstellung 67 von Fig. 12 zeigt den Generator gemäß Darstellung 60 von Fig. 11. Im Gegensatz dazu erfolgt hier jedoch eine elektrische Verbindung, bei der die Teile 65, 66 der piezoelektrischen Platte 63 parallel geschaltet sind und in Phase zur Erregerspannung U1. Bei dieser Beschaltung arbeitet die piezoelektrische Platte 63 in Analogie zur Funktion der Platte 29, welche in Fig. 5 dargestellt ist.

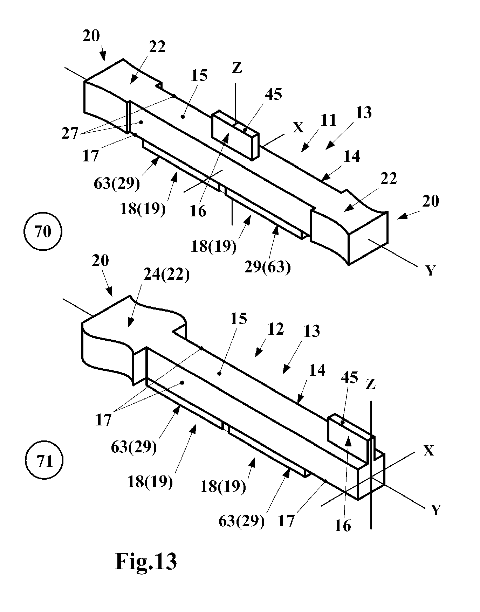

In Darstellung 70 von Fig. 13 ist ein Aktor einer Antriebseinheit gemäß Fig. 3 gezeigt, bei welchem an der Seitenfläche 17 des Resonators 14 zwei Generatoren 18 und 19 angeordnet sind. In Analogie hierzu ist in Darstellung 71 von Fig. 13 ein Aktor einer Antriebseinheit gemäß Fig. 4 gezeigt.

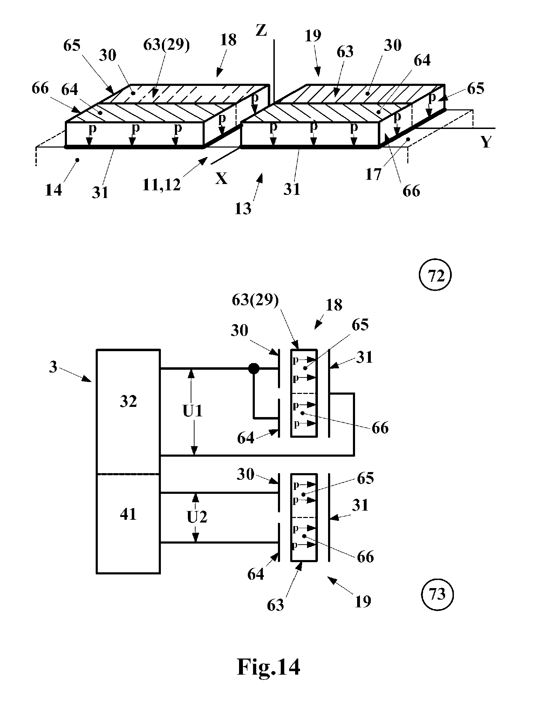

Darstellung 72 von Fig. 14 zeigt eine weitere mögliche Ausführungsform für die Generatoren 18, 19 des Aktors 13, wobei der Generator 18 als piezoelektrische Platte 63 gemäß Darstellung 60 von Fig. 11 oder als piezoelektrische Platte 29 gemäß Darstellung 33 von Fig. 5 ausgeführt ist, während der Generator 19 als piezoelektrische Platte 63 gemäß Darstellung 60 von Fig. 11 ausgeführt ist.

Darstellung 73 von Fig. 14 zeigt die Schaltung zum Verbinden der Generatoren 18 und 19 gemäß Darstellung 72 mit der elektrischen Erregervorrichtung 3. Beim Anlegen der elektrischen Spannungen U₁ und U₂ an die Elektroden 30, 64 und 31 der Generatoren 18, 19 bewegt sich der Punkt a und die anderen Punkte der Friktionsoberfläche 45 des Aktors 13 auf elliptischen Bahnen, wie dies durch die gestrichelte Linie in den Figs. 7 und 10 veranschaulicht ist.

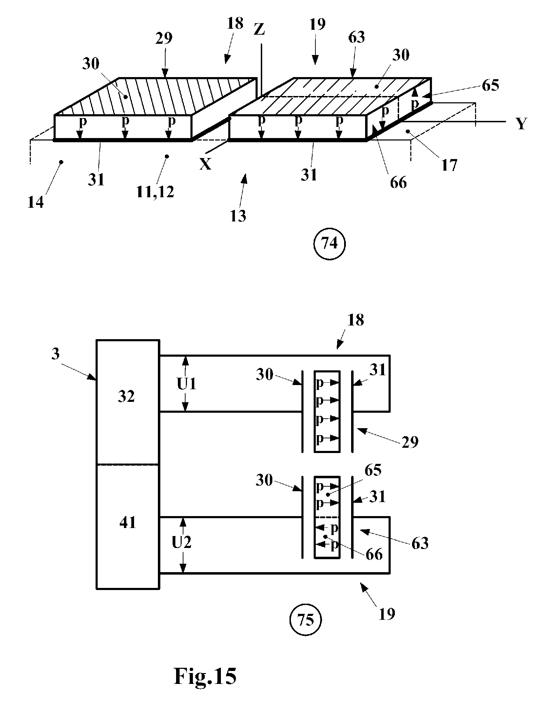

Die Darstellung 74 von Fig. 15 zeigt eine weitere mögliche Ausführungsform für die Generatoren 18, 19 des Aktors 13, wobei der Generator 18 ist als piezoelektrische Platte 29 gemäß Darstellung 33 von Fig. 5 ausgeführt ist, während der Generator 19 als piezoelektrische Platte 63 gemäß Darstellung 60 von Fig. 11 ausgeführt ist. Hierbei umfasst die piezoelektrische Platte 63 die zwei gleichen Teile 65 und 66, die in zwei entgegengesetzten Richtungen senkrecht zu den Elektroden polarisiert sind, die Erregerelektrode 30 und die allgemeinen Elektrode 31.

Darstellung 75 von Fig. 15 zeigt die Schaltung zum Verbinden der Generatoren 18, 19 gemäß Darstellung 74 mit der elektrischen Erregervorrichtung 3.

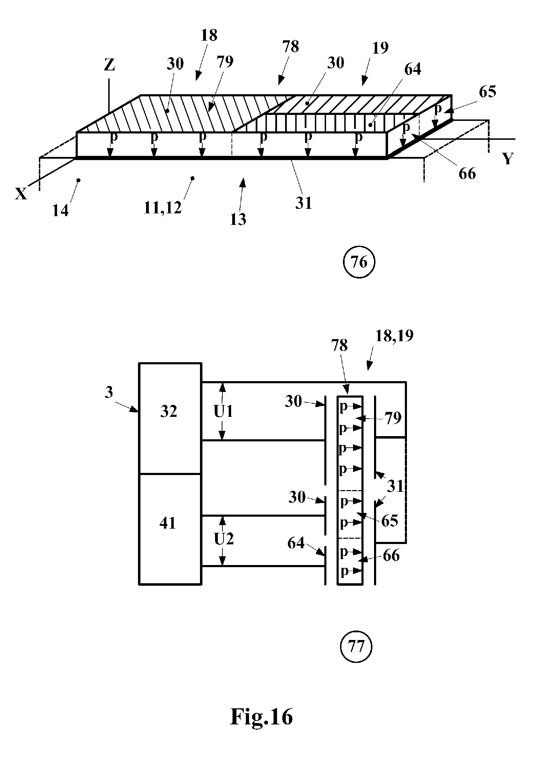

In Darstellung 76 von Fig. 16 ist eine mit Hilfe der piezoelektrischen Platte 78 realisierte konstruktive Ausführung für die Generatoren 18, 19 des Aktors 13 gezeigt. Hierbei ist die piezoelektrische Platte 78 in die drei Teile 79, 65 und 66 geteilt. Das Teil 79 bildet zusammen mit der Elektrode 30 und einem Teil der Elektrode 31 den Generator 18. Die Teile 65 und 66 bilden zusammen mit den Elektroden 30, 64 und dem entsprechend anderen Teil der Elektrode 31 den Generator 19.

Darstellung 77 von Fig. 16 zeigt die Schaltung zum Verbinden der Generatoren 18, 19 gemäß Darstellung 76 mit der elektrischen Erregervorrichtung 3.

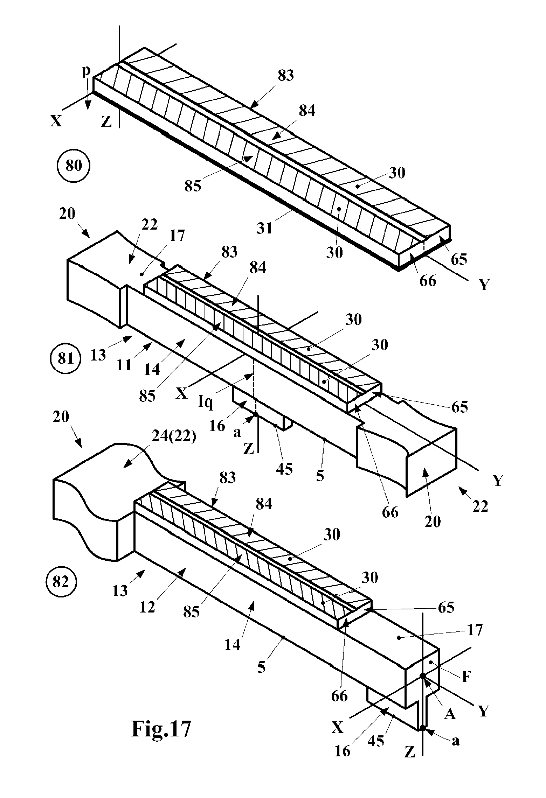

Darstellung 80 von Fig. 17 zeigt eine weitere Ausführungsform für einen Aktor in Form einer piezoelektrischen Platte 83, welche zwei Generatoren 84 und 85 für zwei geneigt angeordnete akustische Biegestehwellen gleicher Frequenz umfasst. Durch die piezoelektrische Platte 83 wird die yz-Ebene in die zwei symmetrische Teile 65 und 66 geteilt. Der Generator 84 wird aus der Elektrode 30 des Teils 65 und einem Teil der Elektrode 31 gebildet, während der Generator 85 durch die Elektrode 30 des Teils 66 und dem entsprechenden anderen Teil der Elektrode 31 gebildet wird.

Die Darstellungen 81 und 82 von Fig. 17 zeigen jeweils einen Aktor einer Antriebseinheit, bei welchem am Resonator 14 eine piezoelektrische Platte 83 gemäß Darstellung 80 angeordnet ist.

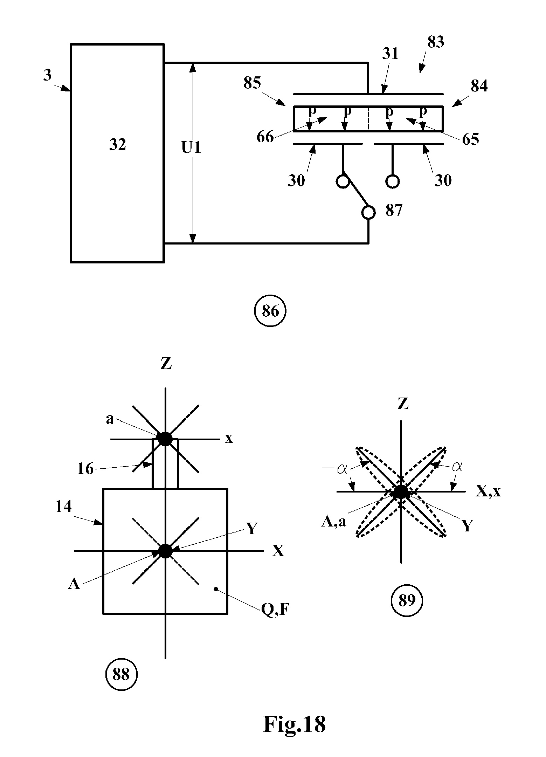

Darstellung 86 von Fig. 18 verdeutlicht in einem Blockschaltbild die elektrische Verbindung der Generatoren 84, 85 der piezoelektrischen Platte 83 gemäß Darstellung 80 von Fig. 18 mit der elektrischen Erregervorrichtung 3 bei einphasiger Ansteuerung des Aktors 13. Die Schaltung umfasst den Umschalter 87, mit dessen Hilfe die elektrische Erregerspannung U₁ an die Elektroden 30 und 31 des Generators 84 oder des Generators 85 angelegt wird.

Bei Erregung des Generators 18 oder des Generators 19 krümmt die piezoelektrische Platte 83 den Resonator 14 in der Ebene, die unter dem Winkel α oder -α zur xy-Ebene verläuft. Dabei wird im Resonator 14 eine geneigt angeordnete akustische Biegestehwelle erzeugt. Diese Welle ist ebenfalls unter dem Winkel α oder -α zur xy-Ebene geneigt. Bei einer solchen Welle bewegen sich die Punkte A und a auf linearen oder auf gestreckten elliptischen Bewegungsbahnen, geneigt zur xy-Ebene unter dem Winkel α oder -α, was in den Darstellungen 88 und 89 der Fig. 18 durch eine gestrichelte Linie veranschaulicht ist.

Die erfindungsgemäße Antriebsvorrichtung ermöglicht die gleichzeitige Erregung der Generatoren 84 und 85 mit Hilfe der elektrischen Spannungen U₁ und U₂. Bei einer solchen Erregung bewegen sich die Punkte A und a der Friktionsoberfläche 45 auf kreis- oder elliptischen Bewegungsbahnen, wie beispielsweise veranschaulicht durch die gestrichelten Linien in den Darstellungen 58 und 59 von Fig. 10.

In allen zuvor beschriebenen Ausführungsformen betreffend den Aktor 13 sind die piezoelektrischen Platten 29, 63, 78 und 83 mit einem Epoxidharzkleber oder einem ähnlichen Kleber, der eine akustisch starre Verbindung der piezoelektrischen Platte mit dem elastischen bzw. biegbaren Resonator bildet, fest mit dem Resonator 14 verbunden.

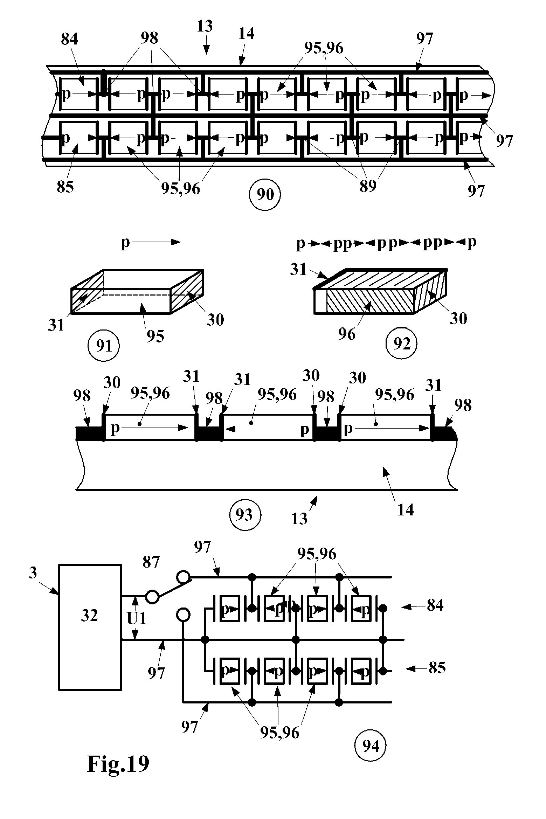

Darstellung 90 von Fig. 19 veranschaulicht in einer Draufsicht den Aufbau der piezoelektrischen Platte 83 des Aktors 13 gemäß Darstellung 81 von Fig. 17, bei welchem die Generatoren 84, 85 für zwei geneigt angeordnete akustische Biegestehwellen als monolithische piezoelektrische Wandler ausgeführt sind, die entweder 3-schichtige Piezoelemente 95 gemäß Darstellung 91 von Fig. 19 oder Multilayerpiezoelemente 96 gemäß Darstellung 92 von Fig. 19 aufweisen. Die Generatoren 84, 85 sind also aus einer Vielzahl von piezoelektrischen Wandlern aufgebaut (Mehrelemente-Wandler).

Der Resonator 14 ist hierbei aus einem hochtemperaturstabilen Kunststoff gefertigt, und auf der Seitenfläche 17 sind elektrisch leitende Kupferbahnen mit den Kontaktflächen 89 aufgebracht. Wie in den Darstellungen 90 und 93 von Fig. 19 gezeigt, sind die Piezoelemente 95 bzw. 96 an die Kontaktflächen 98 angelötet. Sowohl anhand der Darstellung 90 von Fig. 19, als auch anhand des Blockschaltbilds gemäß Darstellung 94 von Fig. 19 ist zu erkennen, dass die Piezoelemente 95 bzw. 96 untereinander parallel und miteinander in Phase geschaltet sind.

Beim Anlegen der elektrischen Spannung U₁ an die als piezoelektrische Mehrelemente-Wandler ausgeführten Generatoren 84 oder 85 wird im Resonator 14 eine geneigt angeordnete Biegestehwelle erzeugt, bei der sich die Punkte A, a und alle anderen Punkte der Friktionsoberfläche 45 auf linearen Bewegungsbahnen oder gestreckten elliptischen Bewegungsbahnen bewegen (siehe gestrichelte Linien in den Darstellungen 88 und 89 von Fig. 18).

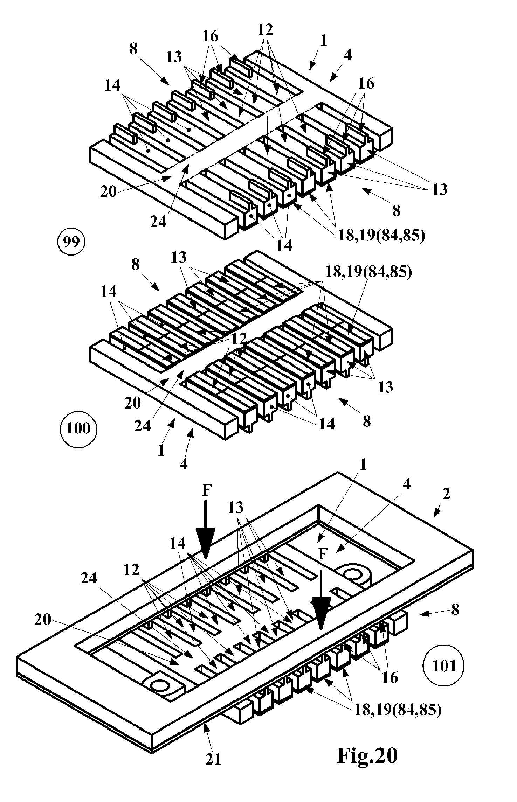

Darstellung 99 von Fig. 20 zeigt die Oberseite einer weiteren Ausführungsform einer Antriebseinheit einer erfindungsgemäßen Antriebsvorrichtung, während Darstellung 100 von Fig. 20 die entsprechende Unterseite dieser Antriebseinheit zeigt. Es handelt sich um eine doppelt kammförmige Struktur der Antriebseinheit, bei welchem das Trägerelement eine im Wesentlichen H-förmige Geometrie aufweist, und an dem entsprechenden Mittelsteg die Resonatoren zu beiden Seiten angeordnet sind. Darstellung 101 von Fig. 20 zeigt eine Antriebseinheit gemäß Darstellung 99 bzw. Darstellung 100 zusammen mit einem anzutreibenden Element.

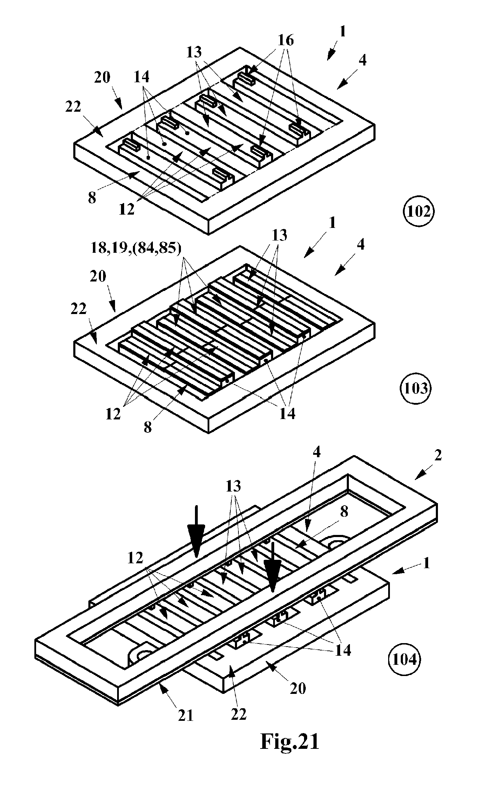

Darstellung 102 von Fig. 21 zeigt die Oberseite einer weiteren Ausführungsform einer Antriebseinheit einer erfindungsgemäßen Antriebsvorrichtung, und Darstellung 103 veranschaulicht die entsprechende Unterseite der Antriebseinheit gemäß Darstellung 102. Das Trägerelement 20 ist hierbei als Rahmen ausgeführt, woran die Resonatoren derart befestigt sind, dass sie abwechselnd an gegenüberliegenden Seiten des Rahmens des Trägerelements angeordnet sind und jeweils nur mit einem distalen Endabschnitt mit dem Trägerelement verbunden sind, während der gegenüberliegende distale Endabschnitt der Resonatoren frei ist und dementsprechend nicht mit dem Trägerelement verbunden ist. Darstellung 104 von Fig. 21 zeigt eine Antriebseinheit gemäß Darstellung 102 bzw. Darstellung 103 zusammen mit einem anzutreibenden Element. Das anzutreibende Element ist hierbei rahmenförmig, und die beiden längeren Schenkel des Rahmens befinden sich in Friktionskontakt mit den Friktionselementen der Aktoren 13.

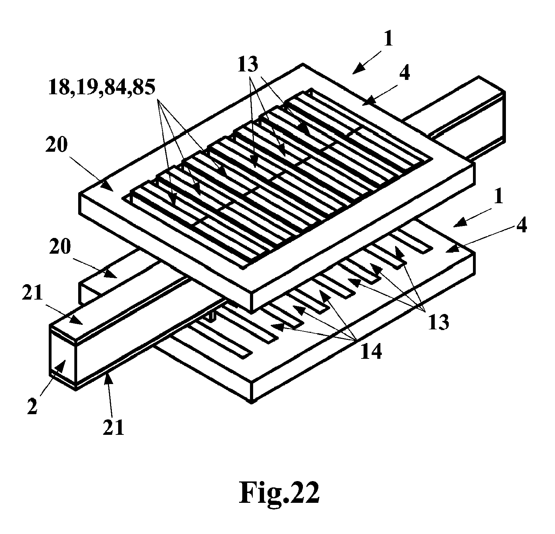

Gemäß Fig. 22, die eine weitere Ausführungsform einer erfindungsgemäßen Antriebsvorrichtung zeigt, kann diese auch zwei Antriebseinheiten aufweisen, die im konkreten Fall einen Aufbau gemäß Fig. 3 besitzen und gegenüberliegend angeordnet sind, so dass das anzutreibende Element zwischen ihnen angeordnet ist. Das anzutreibende Element 2 weist hierbei zwei gegenüberliegend angeordnete Friktionsoberflächen 21 auf.

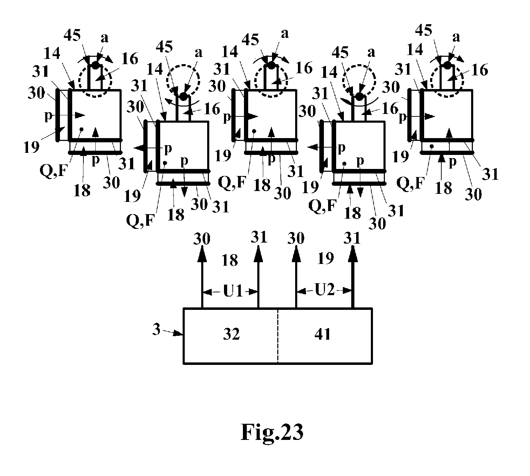

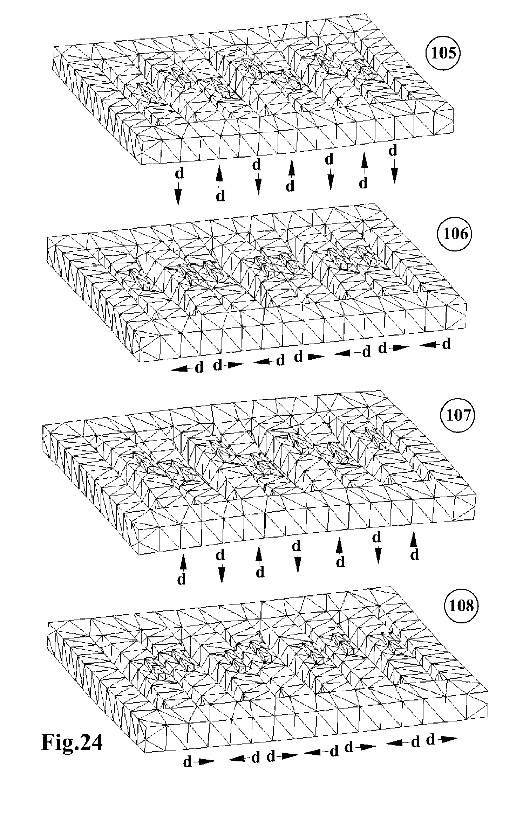

Fig. 23 zeigt eine mögliche Ausführungsform der elektrischen Schaltung zum Verbinden der Generatoren 18, 19 einer erfindungsgemäßen Antriebsvorrichtung mit der elektrischen Erregervorrichtung 3. Bei dieser Ausführungsform der Antriebsvorrichtung werden die Generatoren 18 und 19 der benachbarten Aktoren 13 gegenphasig in Bezug zu den Spannungen U₁ und U₂ verbunden. Bei einer derartigen Verbindung bewegen sich die Resonatoren 14 in der gleichen Richtung auf kreisförmigen (oder elliptischen) Bewegungsbahnen mit einer Phasenverschiebung von 180° zueinander. Dies ist in den Darstellungen 105 bis 108 von Fig. 24 verdeutlicht, welche die berechneten maximalen Deformationen der Resonatoren 14 des Aktors zeigen. Die Pfeile mit dem Index d kennzeichnen hierbei die Richtungen maximaler Deformation.

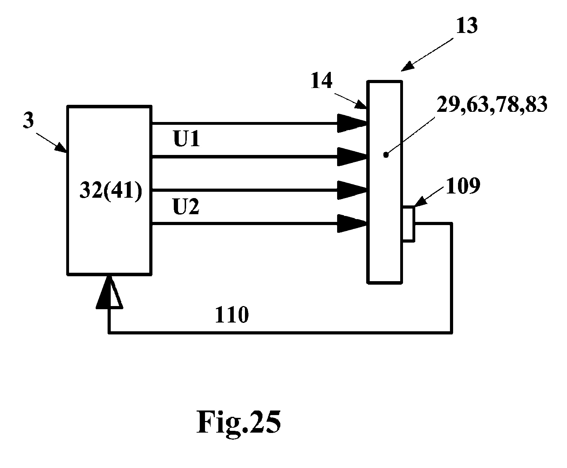

Bei der erfindungsgemäßen Antriebsvorrichtung ist es möglich, die Frequenz fg der Spannungen U₁ und U₂ so zu regeln, dass diese Frequenz stets der maximalen Amplitude der Deformation der stabförmigen biegbaren Resonatoren 14 entspricht. Dafür kann einer der Ultraschallaktoren 13 der erfindungsgemäßen Antriebsvorrichtung aus einem Geber 109 für die Amplitude der Deformationskrümmung seines stabförmigen biegbaren Resonators 14 (siehe Fig. 25) und einem Rückkopplungskreis 110 bestehen, wie dies in Fig. 25 mit einem entsprechenden Blockschaltbild verdeutlicht ist.

Als Geber 109 kann eine auf einer der piezoelektrischen Platten 29, 63, 78, 83 angeordnete zusätzliche Elektrode verwendet werden. Außerdem kann ein einzelnes Piezoelement als Geber 109 dienen.

Die Funktionsweise der erfindungsgemäßen Antriebsvorrichtung ist wie folgt: bei einer Erregung von Biegestehwellen in den Resonatoren 13 bewegen sich der Punkt a und die anderen Punkte der Friktionsoberfläche 45 der Friktionselemente 16 der Aktoren 13 auf den in Fig. 7, 10, 18, 23, 24 dargestellten elliptischen Bewegungsbahnen oder auf geneigten Bewegungsbahnen. Da das anzutreibende Element 2 an die Friktionsoberfläche 45 der Friktionselemente 16 seiner Friktionsoberfläche 21 angepresst ist, hat die Bewegung der Friktionselemente 16 eine Bewegung des anzutreibenden Elements 2 in Richtung der Bewegung der Punkte der Friktionsoberfläche des Friktionselementes 16 zur Folge.

Durch die Verwendung des Gebers 109 und des Rückkopplungskreises 110 ist es stets möglich, die Frequenz fg der Erregerspannungen U₁ und U2 durch die Auswertung des Phasensignals des Gebers 109 zu regeln.

Der Aufbau der Antriebseinheit der erfindungsgemäßen Antriebsvorrichtung als Mehr-Aktorenplattform, bestehend aus einer Vielzahl biegbarer Resonatoren 14, ermöglicht es, jeden Aktor 13 fest auf einem ihn halternden Trägerelement 20 zu befestigen. Das wird dadurch ermöglicht, dass die Aktoren 13 biegbare stabförmige Resonatoren umfassen, die mit der Mode λ/2 oder mit der Mode λ/4 angeregt werden.

Durch die erfindungsgemäße Antriebsvorrichtung ist es im Vergleich zum bekannten Stand der Technik möglich, die Positionierungsgenauigkeit des anzutreibenden Elements 2 zu erhöhen. Das wird dadurch erreicht, dass die erfindungsgemäße Antriebsvorrichtung keine Isolationselemente verwendet werden, die den Aktor 13 von dem Trägerelement 20 isolieren.

Außerdem entsteht in dieser Antriebsvorrichtung in den Befestigungspunkten der Aktoren 13 keine Reibung. Da keine Isolationselemente verwendet werden, treten auch keine Reibungsverluste auf. Das wiederum vermindert die Erwärmung des Motors.

Durch den Verzicht auf die Isolationselemente ist es möglich, die mechanische Güte der Aktoren bzw. der Antriebseinheit insgesamt zu erhöhen, wodurch die maximale Bewegungsgeschwindigkeit des anzutreibenden Elements, sowie die Zug- und Bremskraft der Antriebsvorrichtung erhöht werden können.

## Patentansprüche

1. Antriebsvorrichtung umfassend eine Antriebseinheit (1), die eine Vielzahl von nebeneinander angeordneten und voneinander beabstandeten Aktoren (13) aufweist, wobei zumindest an einem Teil der Aktoren wenigstens ein Friktionselement (16) angebracht ist, ein mit den Friktionselementen in Friktionskontakt stehendes anzutreibendes Element (2) und eine elektrische Erregervorrichtung (3), wobei jeder der Aktoren (13) jeweils durch einen stabförmigen Resonator (14) gebildet ist, der mit einem seiner beiden distalen Endabschnitte oder mit beiden distalen Endabschnitten mit einem Trägerelement (20) verbunden ist, **dadurch gekennzeichnet, dass** der stabförmige Resonator an einer einzigen seiner flächenmäßig größeren freien Seitenflächen wenigstens einen mit der elektrischen Erregervorrichtung (3) verbundenen Generator (18, 19) zur Erzeugung akustischer Biegestehwellen in zwei senkrecht zueinander angeordneten Richtungen in diesem aufweist, wobei die Überlagerung der beiden akustischen Biegestehwellen zu einer Deformationsbewegung des Resonators (14) führt, und diese Deformationsbewegung zum Antrieb des anzutreibenden Elements (2) in einer zur Längsausrichtung der Aktoren senkrechten Richtung nutzbar ist.

2. Antriebsvorrichtung nach Anspruch 1, **dadurch gekennzeichnet, dass** die Resonatoren (14) einstückig mit dem Trägerelement (20) ausgeführt sind.

3. Antriebsvorrichtung nach einem der vorangehenden Ansprüche, **dadurch gekennzeichnet, dass** wenigstens einer der Aktoren (13) einen Geber (109) für die Amplitude der Biegedeformation aufweist.

4. Antriebsvorrichtung nach Anspruch 4, dadurchgekennzeichnet, dass die elektrische Erregervorrichtung (3) einen Rückkopplungskreis (110) zur Regelung der Frequenz der Erregerspannung in Bezug zur Phase des Gebers (109) für die Amplitude der Biegedeformation aufweist.

5. Antriebsvorrichtung nach einem der vorhergehenden Ansprüche, **dadurch gekennzeichnet, dass** der Querschnitt senkrecht zur Längsrichtung des Resonators in x-Richtung eine Ausdehnung t_{X} und in zur x-Richtung senkrechten z-Richtung eine Ausdehnung t_{z} hat, wobei für das Verhältnis tₓ/t_{z} 0,8<tₓ/t_{z}≤1 gilt.

6. Antriebsvorrichtung nach Anspruch 5, **dadurch gekennzeichnet, dass** der Generator als piezoelektrische Platte mit einer Dicke tp ausgeführt ist, wobei tp 5 bis 10 mal kleiner als tₓ oder t_{z} ist.
